# EUROPÄISCHE PATENTSCHRIFT

(11) **EP 0 865 324 B1**
(45) Veröffentlichungstag und Bekanntmachung des Hinweises auf die Patenterteilung: **05.12.2001**
(21) Anmeldenummer: 96932521.6
(22) Anmeldetag: 13.09.1996
(51) Int. Cl.: B05D 3/06, G11B 7/26

(54) **VORRICHTUNG ZUM BESCHICHTEN VON SCHEIBENFÖRMIGEN INFORMATIONS-SPEICHERMEDIEN**
DEVICE FOR COATING DISC-SHAPED INFORMATION STORAGE MEDIA
DISPOSITIF D'APPLICATION D'UN REVETEMENT SUR DES SUPPORTS D'INFORMATIONS EN FORME DE DISQUES

(30) Priorität: 08.12.1995 DE 19545943
(43) Veröffentlichungstag der Anmeldung: 23.09.1998
(73) Patentinhaber: Steag HamaTech AG, 75447 Sternenfels (DE)
(72) Erfinder: WEBER, Klaus, D-75015 Bretten (DE); KALLIS, Jürgen, D-75417 Mühlacker (DE)
(74) Vertreter: Wagner, Karl H., Dipl.-Ing.
(86) Internationale Anmeldenummer: EP9604022
(87) Internationale Veröffentlichungsnummer: WO9721495

(56) Entgegenhaltungen:
- PATENT ABSTRACTS OF JAPAN vol. 011, no. 064 (M-565), 26.Februar 1987 & JP,A,61 222727 (CANON INC), 3.Oktober 1986,
- PATENT ABSTRACTS OF JAPAN vol. 012, no. 042 (P-663), 6.Februar 1988 & JP,A,62 188042 (TOSHIBA CORP), 17.August 1987,
- PATENT ABSTRACTS OF JAPAN vol. 018, no. 293 (P-1747), 3.Juni 1994 & JP,A,06 052575 (KURARAY CO LTD), 25.Februar 1994,

## Beschreibung

Die Erfindung betrifft eine Vorrichtung zum Beschichten von scheibenförmigen Informations-Speichermedien mit einem Beschichtungsmittel, wobei eine Trocknungsstation zum Trocknen des aufgebrachten Beschichtungsmittels mit einer Ultra-Violett (UV)-Lampe vorgesehen ist (vgl. JP-A-62-18804).

Scheibenförmige Informations-Speichermedien sind beispielsweise Kompakt-Scheiben (Compact Discs oder CD's), Mini-Scheiben (Mini Discs), Magneto-optische Scheiben (Magneto-optical Discs), CD-Rom's, CD-R's, Photo- und/oder Video-Scheiben (Photo-CD und/oder Video Discs). Im nachfolgenden werden diese Discs als scheibenförmiges Informations-Speichermedium oder kurz als Speichermedium bezeichnet.

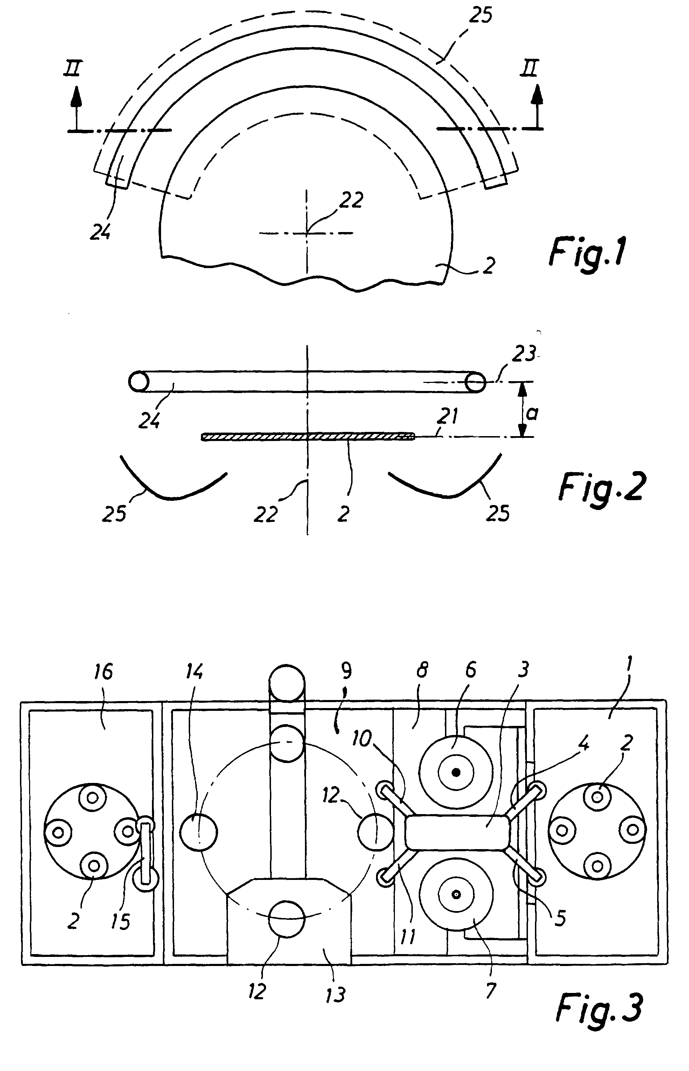

Vorrichtungen der eingangs genannten Art werden von der Anmelderin dieses Patents hergestellt und vertrieben. Fig. 3 zeigt eine schematische Darstellung der Vorrichtung bzw. des Ablaufs des Beschichtungs- und Trocknungsverfahrens in den jeweiligen Stationen dieser Vorrichtung.

In einer Geberstation 1 werden die scheibenförmigen Informations-Speichermedien 2 einer Handhabungseinrichtung 3 - im vorliegenden Fall einem sogenannten Prozess-Topf-Greifer - bereit gestellt, deren bzw. dessen der Geberstation 1 zugewandten Greiferarme 4,5 die von der Geberstation 1 bereit gestellten Speichermedien 2 ergreifen und zu den Beschichtungsstationen 6,7 einer Prozesseinheit 8 transportieren. Nach dem Beschichten der Speichermedien 2 mit einem Beschichtungsmittel, beispielsweise einem Beschichtungslack, werden die Speichermedien 2 mit den einer Trocknungsstation 9 zugewandten Greiferarmen 10,11 zu einer Empfangsposition 12 transportiert, von der sie in einer Trocknungskammer 13 gebracht werden. In der Trockungskammer 13 ist eine nicht dargestellte stabförmige UV-Lampe oberhalb des sich drehenden Speichermediums 2 angeordnet, um das Beschichtungsmittel zu trocknen bzw. auszuhärten. Die in der Trockungskammer 13 durch die UV-Lampe erzeugte Wärme wird mittels einer (nicht dargestellten) Luft-Absaug- oder Umwälzeinrichtung weitgehend entfernt.

Nach dem Trockungsvorgang wird das Speichermedium 2 aus der Trockungskammer 13 in bzw. auf der Trocknungsstation in eine Lage 14 gebracht, in der es von einem weiteren Greifer 15 erfaßt und in bzw. auf die Nehmerstation 16 transportiert wird.

Die zuvor beschriebene Beschichtungsvorrichtung für scheibenförmige Informations-Speichermedien wurden mit großem Erfolg bei der Herstellung derartiger Speichermedien eingesetzt.

Aus der EP 0 449 018 A2 ist eine Bestrahlungseinrichtung zum Trocknen und/oder Härten von Farben oder Lacken mittels einer UV-Lampe bekannt, die in Form von Platten oder kreisförmigen, konzentrischen Rohren ausgebildet ist. Die Formen dieser Bestrahlungseinrichtungen sind dabei im Hinblick auf die Funktion der Strahlungseinrichtung selbst, nicht jedoch im Hinblick auf die Form oder optimale Bestrahlung eines zu bestrahlenden Gegenstandes gewählt.

Die Erfindung legt die Aufgabe zugrunde, Beschichtungsvorrichtungen für scheibenförmige Informations-Speichermedien weiter zu verbessern und insbesondere Vorrichtungen zu schaffen, die pro Zeiteinheit noch mehr Beschichtungsabläufe ermöglichen, noch sicherer und mit weniger Standzeiten auskommen und einen geringeren Fertigungs-und Wartungsaufwand insbesondere für die Trocknungsstation ermöglichen.

Ausgehend von einer bekannten Vorrichtung der zuvor beschriebenen Art wird die gestellte Aufgabe dadurch gelöst, daß die UV-Lampe der Trocknungsstation kreisbogenförmig ausgebildet ist und der Radius der kreisbogenförmigen UV-Lampe größer als der Radius des scheibenförmigen Informations-Speichermediums ist. Dies führt zu folgenden Vorteilen.

Die herkömmliche stabförmige UV-Lampen für die Trocknungsstation strahlen UV-Licht ab, das bezüglich der scheibenförmigen Informations-Speichermedien, deren Beschichtung getrocknet werden soll, nicht gut plaziert ist. Dies bedeutet, daß die Trocknungseffizienz herkömmlicher, stabförmiger UV-Lampen gering ist. Dadurch muß eine UV-Stablampe mit hoher Leistung verwendet werden, um die Trocknung des Beschichtungsmittels während eines vorgegebenen Zeitraums zu gewährleisten. Dies hat jedoch den Nachteil, daß sich das Speichermedium auf hohe Temperaturen bis zu 70°C aufheizt. Die Speichermedien verwerfen sich dabei, bzw. sie krümmen sich und bleiben nicht mehr plan, so daß sich an den Trocknungsvorgang anschließende Maßnahmen erforderlich sind, um die Speichermedien wieder von Verwerfungen zu befreien und eben zu machen. Mit einer kreisbogenförmigen UV-Lampe gemäß der vorliegenden Erfindung wird das Licht bezüglich der scheibenförmigen Speichermedien wesentlich besser plaziert, so daß eine UV-Lampe mit geringerer Leistung zum Trocknen des Beschichtungsmittels und/oder im gleichen oder einem kleineren Zeitraum ausreicht. Dadurch wird das Speichermedium nicht mehr auf Temperaturen aufgeheizt, bei der Verwerfungen, Biegungen oder Welligkeiten auftreten. Mit kreisbogenförmigen UV-Lampen ist es möglich, die Temperatur der Speichermedien während des Trocknungsvorgangs wesentlich geringer und nicht viel höher als auf Zimmertemperatur zu halten. Eine Warmluft-Absaugung oder -Umwälzung zur Warmeabfuhr ist daher entweder gar nicht mehr oder nur noch in geringerem Umfang erforderlich.

Aufgrund der Verwendungsmöglichkeit von UV-Lampen mit geringerer Leistungsabgabe ist es weiterhin möglich, nicht nur den Energieverbrauch zu verringern, sondern auch die Lebenszeit der UV-Lampe zu erhöhen und damit die Standzeiten der Beschichtungsvorrichtung zu verringern, wodurch die Produktivität erhöht wird. Während bei herkömmlichen UV-Lampen 2000 bis 3000 Watt erforderlich waren, ermöglicht die Erfindung von UV-Lampen mit nur ca. 800 Watt.

Ein wesentlicher Vorteil kreisbogenförmiger UV-Lampen besteht insbesondere auch bei der Trocknung der Beschichtung am Rand eines Speichermediums, was beim Trocknungsvorgang besonders kritisch ist. Die Kreisbogenform der UV-Lampe gemäß der vorliegenden Erfindung ermöglicht ein wesentlich gezielteres, plazierteres Bestrahlen des Speichermedium-Randes und damit eine schnellere und gleichmäßigere Trocknung des Beschichtungsmittels im Randbereich, als dies mit stabförmigen UV-Lampen möglich ist.

Gemäß der Erfindung ist der Radius der kreisbogenförmigen UV-Lampe größer als der Radius des scheibenförmigen Informations-Speichermediums. Dies verbessert die gleichmäßige Strahlungsverteilung über das Speichermedium hinweg und insbesondere wird dadurch eine gute Bestrahlung auch des Randbereichs des Speichermediums gewährleistet. Bei einem Radius beispielsweise einer Compact Disc von etwa 60 mm ist es vorteilhaft, den Radius der UV-Lampe im Bereich von 80 bis 100 mm und insbesondere mit 90 mm zu wählen.

Im Hinblick auf eine gute Ausleuchtung und hohe Strahlungseffizienz bzw. gute Plazierung des Lichts auf das Speichermedium ist es vorteilhaft, die bogenförmige UV-Lampe mit einem Kreissegment von bis zu 180° auszubilden. Obgleich auch Kreisbogensegmente von über 180° oder gar ein vollständiger Kreisbogen möglich ist, haben sich im Hinblick auf die Konstruktions- und Raumbegrenzungen der Anlage insbesondere Kreisbögensegmente bis zu 180° bewährt.

Die kreisbogenförmige UV-Lampe ist vorzugsweise in einer Ebene oberhalb der Ebene angeordnet, in der das Speichermedium liegt.

Dadurch wird nicht nur die gesamte Scheibenfläche, sondern auch der Randbereich des scheibenförmigen Speichermediums gleichmäßig mit UV-Licht bestrahlt. Die kreisbogenförmige UV-Lampe ist dabei vorzugsweise konzentrisch zum scheibenförmigen Speichermedium angeordnet.

Gemäß einer weiteren, sehr vorteilhaften Ausführungsform der Erfindung ist auf der der UV-Lampe abgewandten Seite des scheibenförmigen Informations-Speichermediums ein Reflektor, insbesondere in seinem Randbereich vorgesehen, wobei der Reflektor in diesem Randbereich des Speichermediums vorteilhafterweise kanalartig ausgebildet ist. Dieser kanalartiger Reflektor ist vorteilhafterweise ebenfalls bogenförmig, vorzugsweise kreisbogenförmig ausgebildet und vorzugsweise gegenüber der bogenförmigen UV-Lampe angeordnet. Der Reflektor spiegelt das UV-Licht auf die von der UV-Lampe nicht direkt oder nicht ausreichend bestrahlten Bereiche des Speichermediums insbesondere auch im für den Trocknungsvorgang kritischen Randbereich des Speichermediums. Das Bogensegment des Reflektors entspricht dabei vorzugsweise im wesentlichen dem Bogensegment der UV-Lampe.

Der Reflektor ist vorzugsweise aus gedrücktem Aluminium gefertigt und zur optimalen Reflektion der UV-Strahlung ist das Aluminium elektropoliert.

Die Erfindung wird nachstehend anhand der Figuren erläutert. Es zeigen:
- Fig. 1: ein Ausführungsbeispiel für die erfindungsgemäße kreisbogenförmige UV-Lampe in räumlicher Zuordnung zu einem scheibenförmigen Informations-Speichermedium in Aufsicht und in schematischer Darstellung;
- Fig. 2: eine Schnittdarstellung entlang der in Fig. 1 eingezeichneten Schnittlinie II-II; und
- Fig. 3: eine schematische Darstellung einer herkömmlichen Beschichtungsvorrichtung für scheibenförmige Informations-Speichermedien.

Wie aus den Figuren 1 und 2 ersichtlich ist, liegt das scheibenförmige Informations-Speichermedium 2, beispielsweise eine CD, in einer Ebene 21 etwa auf einem sich um eine Achse 22 drehenden, nicht dargestellten Teller angeordnet. In einem Abstand a über dem Speichermedium 2 befindet sich in einer Ebene 23 eine kreisbogenförmige UV-Lampe 24 im wesentlichen konzentrisch zum Speichermedium 2. Das Kreisbogensegment der UV-Lampe 24 weist dabei einen Radius auf, der größer als der Radius des Speichermediums 2 ist. Durch die Anordnung der kreisbogenförmigen UV-Lampe 24 und deren größerem Durchmesser ist nicht nur eine gleichmäßige Bestrahlung der Scheibenfläche, sondern auch eine Bestrahlung des für die Trocknung besonders kritischen Randbereichs des Speichermediums 2 gewährleistet.

Auf der der UV-Lampe 24 abgewandten Seite des Speichermediums 2 ist ein kanalartiger Reflektor 25 aus elektro-poliertem und gedrücktem Aluminium vorgesehen, der sich im wesentlichen im selben Segmentbereich wie die UV-Lampe 24 angeordnet ist. Der Reflektor 25 reflektiert die von der UV-Lampe 24 abgestrahlte UV-Strahlung auf Randbereiche des Mediums 2, die von der von der UV-Lampe direkt abgegebene UV-Strahlung nicht oder nur in geringem Maße erreicht wird. Der Reflektor 25 gewährleistet also eine gleichmäßige Trocknung des Speichermediums 2 auch in den Randbereichen und in Bereichen, die der UV-Lampe abgewandt sind.

Durch die gute Ausnützung der abgestrahlten Energie der kreisbogenförmigen UV-Lampe aufgrund der optimalen Plazierung der Strahlung auf das Speichermedium 2 ist es möglich, für den Trockenvorgang mit einer geringeren Gesamtleistung auszukommen bzw. die Trocknung mit einem kleineren Zeitraum durchzuführen als dies bei herkömmlichen Vorrichtungen der Fall war. Dadurch wird das Speichermedium 2 selbst wesentliche geringer aufgewärmt und Verwerfungen des Speichermediums 2 aufgrund seiner Aufheizung vermieden. Auch ist es - wenn überhaupt - nur noch in geringem Umfange erforderlich, die entstehende Wärme aus der Trocknungskammer abzuführen.

Die Erfindung wurde anhand eines bevorzugten Ausführungsbeispiels erläutert. Dem Fachmann sind jedoch Ausgestaltungen und Abwandlungen möglich, ohne daß dadurch der Erfindungsgedanke verlassen wird. Beispielsweise ist es möglich, die kreisbogenförmige UV-Lampe 24 und/oder den kreisbogenförmig gestalteten Reflektor 25 nicht nur - wie dargestellt - in einem Kreissegment von 180°, sondern über ein kleineres oder größeres Kreisbogensegment auszubilden. Weiterhin ist es möglich, über der kreisbogenförmigen UV-Lampe einen weiteren (nicht dargestellten) Reflektor gegebenenfalls in Kreisbogenform vorzusehen, der das von der UV-Lampe nach oben abgestrahlte Licht zusätzlich auf das Speichermedium 2 richtet.

## Patentansprüche

1. Vorrichtung zum Beschichten von scheibenförmigen Informations-Speichermedien (2) mit einem Beschichtungsmittel, wobei eine Trocknungsstation (9) zum Trocknen des aufgebrachten Beschichtungsmittels mit einer Ultra-Violett (UV)-Lampe (24) vorgesehen ist, **dadurch gekennzeichnet, daß** die UV-Lampe (24) der Trocknungsstation (9) bogenförmig ausgebildet ist, und der Radius der bogenförmigen UV-Lampe (24) größer als der Radius des scheibenförmigen Informations-Speichermediums (2) ist.

2. Vorrichtung nach Anspruch 1, **dadurch gekennzeichnet, daß** bei einem Radius des scheibenförmigen Informations-Speichermediums (2) von etwa 60 mm die bogenförmige UV-Lampe (24) einen Radius im Bereich von 80 bis 100 mm, und insbesondere von 90 mm aufweist.

3. Vorrichtung nach einem der vorhergehenden Ansprüche, **dadurch gekennzeichnet, daß** die bogenförmige UV-Lampe (24) ein Kreisbogensegment von bis zu 180° umfaßt.

4. Vorrichtung nach einem der vorhergehenden Ansprüche, **dadurch gekennzeichnet, daß** die bogenförmige UV-Lampe (24) in einem Abstand a über dem scheibenförmigen Informations-Speichermedium (2) angeordnet ist.

5. Vorrichtung nach einem der vorhergehenden Ansprüche, **dadurch gekennzeichnet, daß** auf der der UV-Lampe (24) abgewandten Seite des scheibenförmigen Informations-Speichermediums (2) ein Reflektor (25) vorgesehen ist.

6. Vorrichtung nach Anspruch 5, **dadurch gekennzeichnet, daß** der Reflektor (25) im Bereich des Randes des Informations-Speichermediums (2) kanalartig ausgebildet ist.

7. Vorrichtung nach Anspruch 5 oder 6, **dadurch gekennzeichnet, daß** der Reflektor (25) bogenförmig ausgebildet ist.

8. Vorrichtung nach einem der Ansprüche 5 bis 7, **dadurch gekennzeichnet, daß** das Bogensegment des Reflektors (25) im wesentlichen dem Kreisbogensegment der UV-Lampe (24) entspricht.

9. Vorrichtung nach einem der Ansprüche 5 bis 8, **dadurch gekennzeichnet, daß** das Reflektor (25) aus gedrücktem Aluminium gefertig ist.

10. Vorrichtung nach Anspruch 8, **dadurch gekennzeichnet, daß** das Aluminium elektropoliert ist.

11. Vorrichtung nach einem der vorhergehenden Ansprüche, **dadurch gekennzeichnet, daß** das scheibenbogenförmige Informations-Speichermedium (2) während des Trocknungsvorgangs gedreht wird.

## Claims

1. Device for coating disc-shaped information storage media (2) with a coating medium, whereby a drying station (9) for drying the applied coating medium is provided with an ultraviolet (UV) lamp (24), **characterized in that** the UV lamp (24) of the drying station (9) is arc-shaped and the radius of the arc-shaped UV lamp (24) is greater than the radius of the disc-shaped information storage medium (2).

2. Device according to claim 1, **characterized in that** for a radius of the disc-shaped information storage medium (2) of approximately 60 mm the arc-shape UV lamp (24) has a radius in the range of 80 to 100 mm, and especially of 90 mm.

3. Device according to one of the preceding claims, **characterized in that** the arc-shaped UV lamp (24) has a circular arc segment of up to 180°.

4. Device according to one of the preceding claims, **characterized in that** the arc-shaped UV lamp (24) is arranged at a spacing a above the disc-shaped information storage medium (2).

5. Device according to one of the preceding claims, **characterized in that** at the side of the disc-shaped information storage medium (2) facing away from the UV lamp (24) a reflector (25) is provided.

6. Device according to claim 5, **characterized in that** the reflector (25) in the edge area of the information storage medium (2) is channel-shaped.

7. Device according to claim 5 or 6, **characterized in that** the reflector (25) is arc-shaped.

8. Device according to one of the claims 5 through 7, **characterized in that** the arc segment of the reflector (25) substantially corresponds to the circular arc segment of the UV lamp (24).

9. Device according to one of the claims 5 through 8, **characterized in that** the reflector (25) is manufactured of pressed aluminum.

10. Device according to claim 8, **characterized in that** the aluminum is electro-polished.

11. Device according to one of the preceding claims, **characterized in that** the disc-shaped information storage medium (2) is rotated during the drying process.

## Revendications

1. Dispositif pour enduire des supports de stockage d'informations (2) en forme de disque avec un produit d'enduction, où est prévu un poste de séchage (9) pour sécher le moyen d'enduction appliqué avec une lampe ultra-violette (UV), **caractérisé en ce que** la lampe UV (24) du poste de séchage (9) est réalisée en forme d'arc, et **en ce que** le rayon de la lampe UV (24) en forme d'arc est plus grand que le rayon du support de stockage d'informations (2) en forme de disque.

2. Dispositif selon la revendication 1, **caractérisé en ce que** lors d'un rayon du support de stockage d'informations (2) en forme de disque d'environ 60 mm, la lampe UV en forme d'arc (24) présente un rayon dans la plage de 80 à 100 mm, et notamment de 90 mm.

3. Dispositif selon l'une des revendications précédentes, **caractérisé en ce que** la lampe UV (24) en forme d'arc comprend un segment en arc de cercle jusqu'à 180°.

4. Dispositif selon l'une des revendications précédentes, **caractérisé en ce que** la lampe UV (24) en forme d'arc est disposée à une distance a au-dessus du support de stockage d'informations (2) en forme de disque.

5. Dispositif selon l'une des revendications précédentes, **caractérisé en ce qu'**un réflecteur (25) est prévu sur le côté du support de stockage d'informations (2) en forme de disque éloigné de la lampe UV (24).

6. Dispositif selon la revendication 5, **caractérisé en ce que** le réflecteur (25) est réalisé en forme de canal au voisinage du bord du support de stockage d'informations (2).

7. Dispositif selon la revendication 5 ou 6, **caractérisé en ce que** le réflecteur (25) est réalisé en forme d'arc.

8. Dispositif selon l'une des revendications 5 à 7, **caractérisé en ce que** le segment d'arc du réflecteur (25) correspond sensiblement au segment en arc de cercle de la lampe UV (24).

9. Dispositif selon l'une des revendications 5 à 8, **caractérisé en ce que** le réflecteur (25) est fabriqué en aluminium pressé.

10. Dispositif selon la revendication 8, **caractérisé en ce que** l'aluminium est poli électriquement.

11. Dispositif selon l'une des revendications précédentes, **caractérisé en ce que** le support de stockage d'informations en forme de disque (2) est amené à tourner pendant l'opération de séchage.
